# EUROPÄISCHE PATENTSCHRIFT

(11) **EP 3 686 135 B1**
(45) Veröffentlichungstag und Bekanntmachung des Hinweises auf die Patenterteilung: **08.03.2023**
(21) Anmeldenummer: 20151447.8
(22) Anmeldetag: 13.01.2020
(51) Int. Cl.: B65G 57/24, B65G 57/03

(54) **VORRICHTUNG ZUM KOMMISSIONIEREN VON LADEGUT AUF PALETTEN UND VERFAHREN ZUM KOMMISSIONIEREN**
DEVICE FOR PICKING GOODS ON PALLETS AND METHOD FOR PICKING
DISPOSITIF DE PRÉPARATION DE COMMANDES DE MARCHANDISES CHARGÉES SUR DES PALETTES ET PROCÉDÉ DE PRÉPARATION DE COMMANDES

(30) Priorität: 22.01.2019 DE 102019200723
(43) Veröffentlichungstag der Anmeldung: 29.07.2020
(73) Patentinhaber: Winkel GmbH, 75428 Illingen (DE)
(72) Erfinder: Loupas, Athanasios, 75417 Mühlacker (DE)
(74) Vertreter: Patentanwälte Ruff, Wilhelm, Beier, Dauster & Partner mbB

(56) Entgegenhaltungen:
- EP-A1- 3 241 789
- EP-A1- 3 536 640
- DE-A1-102012 022 454
- DE-A1-102012 106 112

## Beschreibung

Die Erfindung betrifft eine Vorrichtung und ein Verfahren zum Kommissionieren von Ladegut auf Paletten.

Aus der deutschen Offenlegungsschrift DE 10 2012 022 454 A1 ist eine Vorrichtung geeignet zum Kommissionieren von Ladegut auf Paletten bekannt, wobei die Paletten einen Ladeboden und wenigstens zwei Seitenwände aufweisen, mit einem Kommissionierschacht, der sich bis zu einer Kommissionierebene, in der Ladegut während des Kommissionierens bewegt wird, erstreckt, und mit einer Hub- und Absenkvorrichtung zum Heben und Absenken der Palette in dem Kommissionierschacht, wobei Begrenzungswände des Kommissionierschachts auf Höhe der Kommissionierebene enden oder sich lediglich eine Begrenzungswand des Kommissionierschachts über die Kommissionierebene hinaus erstreckt.

Aus der deutschen Offenlegungsschrift DE 10 2012 106 112 A1 ist eine Vorrichtung zum Kommissionieren von Ladegut auf Rollwagen bekannt, bei der zur Erleichterung der Stapelung von Ladegut auf Rollwagen die Nutzung einer in den Kommissionierschacht einfahrbaren Zunge vorgesehen ist, welche höhenverstellbar ausgebildet ist. Es ist eine ebenso höhenverstellbare Abstreifvorrichtung vorgesehen.

Aus der europäischen Offenlegungsschrift EP 3 241 789 A1 ist eine Vorrichtung zum Kommissionieren von Ladegut auf Rollwagen bekannt.

Eine weitere Vorrichtung zum Kommissionieren von Ladegut in Rollbehälter ist aus der nicht vorveröffentlichten europäischen Offenlegungsschrift EP 3 536 640 A1 bekannt.

Mit der Erfindung sollen eine Vorrichtung und ein Verfahren zum Kommissionieren von Ladegut auf Paletten verbessert werden.

Erfindungsgemäß ist hierzu eine Vorrichtung zum Kommissionieren von Ladegut auf Paletten mit den Merkmalen von Anspruch 1 und ein Verfahren zum Kommissionieren von Ladegut auf eine Palette mit den Merkmalen von Anspruch 7 vorgesehen. Vorteilhafte Weiterbildungen der Erfindung sind in den Unteransprüchen angegeben.

Die Erfindung betrifft eine Vorrichtung zum Kommissionieren von Ladegut auf Paletten, wobei die Paletten einen Ladeboden und wenigstens zwei Seitenwände aufweisen, mit einem Kommissionierschacht, der sich bis zu einer Kommissionierebene, in der Ladegut während des Kommissionierens bewegt wird, erstreckt, einer Hub- und Absenkvorrichtung zum Heben und Absenken der Palette in dem Kommissionierschacht, einer in den Kommissionierschacht von der Seite her einfahrbaren und wieder ausfahrbaren Zunge zum Beladen mit Ladegut, einer Vorrichtung zum schrittweisen Absenken der Zunge während des Beladens mit Ladegut, so dass eine Oberseite einer zuletzt auf die Zunge gelegten Ladegutschicht etwa auf Höhe der Kommissionierebene angeordnet ist, und Abstreifmitteln, die zumindest beim Ausfahren der Zunge aus dem Kommissionierschacht Ladegut von der Oberseite der Zunge auf den Ladeboden der Palette abstreifen, wobei Begrenzungswände des Kommissionierschachts auf Höhe der Kommissionierebene enden oder sich lediglich eine Begrenzungswand des Kommissionierschachts über die Kommissionierebene hinaus erstreckt.

Durch die erfindungsgemäße Vorrichtung lassen sich Paletten mit wenigstens zwei Seitenwänden automatisch beladen, indem das Ladegut zunächst auf Höhe der Kommissionierebene auf eine Zunge gestapelt und dann nachfolgend, nachdem eine vollständige Palettenladung auf der Zunge gestapelt ist, auf den Ladeboden der Palette abgestreift wird. Da die Begrenzungswände des Kommissionierschachts entweder auf Höhe der Kommissionierebene enden oder sich lediglich eine Begrenzungswand des Kommissionierschachts über die Kommissionierebene hinaus erstreckt, ist die Kommissionierebene sehr gut zugänglich und die erfindungsgemäße Vorrichtung ist dadurch in besonderer Weise für das automatische Kommissionieren von Ladegut geeignet, beispielsweise mithilfe eines Roboters.

Gemäß der Erfindung weisen die Abstreifmittel einen bewegbaren Anschlag auf.

Auf diese Weise kann der Vorgang des Abstreifens flexibel gestaltet werden und beispielsweise auf unterschiedlichen Höhen im Kommissionierschacht durchgeführt werden.

Gemäß der Erfindung ist der bewegbare Anschlag mittels eines Rollladens ausgebildet, der eine Öffnung in einer ersten Begrenzungswand des Kommissionierschachts, durch die die Zunge in den Kommissionierschacht ein- und ausgefahren werden kann, wenigstens abschnittsweise verschließen kann.

Mittels eines Rollladens kann in sehr einfacher Weise ein bewegbarer Anschlag gebildet werden.

In Weiterbildung der Erfindung kann der bewegbare Anschlag der Abstreifmittel, also der Anschlag zum Abstreifen des Ladeguts, über die Kommissionierebene hinausbewegt werden, um eine Gegenplatte beim Anordnen von Ladegut auf der Zunge zu bilden.

Der bewegbare Anschlag erhält dadurch eine Doppelfunktion, nämlich einerseits als Gegenplatte beim Anordnen von Ladegut auf der Zunge zu wirken und andererseits das Abstreifen von Ladegut von der Zunge zu ermöglichen. Dadurch wird die Flexibilität der erfindungsgemäßen Vorrichtung weiter erhöht.

In Weiterbildung der Erfindung ist ein zweiter Rollladen vorgesehen, der die Öffnung in der ersten Begrenzungswand des Kommissionierschachts unterhalb der Zunge wenigstens abschnittsweise verschließen kann.

Durch Verschließen der Öffnung können beispielsweise Sicherheitsvorschriften erfüllt und eine Verschmutzung der erfindungsgemäßen Vorrichtung kann verhindert werden. Darüber hinaus kann verhindert werden, dass Ladegut von der benachbarten Palette herabfällt.

In Weiterbildung der Erfindung sind schlitzartige Führungen für die Seitenwände der Palette vorgesehen, wobei sich die Führungen von der Kommissionierebene aus nach unten erstrecken und wobei eine Vorderfläche jeder schlitzartigen Führung eine Begrenzung des Kommissionierschachts bildet.

Auf diese Weise können die Seitenwände beim Beladen der Palette hinter einer Begrenzung des Kommissionierschachts angeordnet werden. Dies kann beispielsweise sehr vorteilhaft sein, wenn die Seitenwände eine raue oder auch zerklüftete Oberfläche aufweisen, an denen Ladegut hängen bleiben könnte. Auch dann, wenn die Seitenwände der Palette nicht starr, sondern beispielsweise leicht beweglich sind, können die schlitzartigen Führungen für eine sichere Anordnung der Seitenwände sorgen, so dass die Seitenwände den Beladevorgang der Palette nicht stören.

In Weiterbildung der Erfindung ist wenigstens eine der schlitzartigen Führungen mittels eines U-artig gebogenen Führungsblechs gebildet, das dann, wenn eine Seitenwand der Palette in die Führung eingeschoben ist, eine Trennfläche zwischen dem Innenraum des Kommissionierschachts und der Seitenwand der Palette bildet.

Durch ein U-Profil, beispielsweise ein gebogenes Blech, kann zum Laderaum der Palette hin eine glatte Begrenzung des Kommissionierschachts bereitgestellt werden.

In Weiterbildung der Erfindung ist zum automatischen Beladen oder Entladen ein Roboter oder ein Ladeportal vorgesehen.

Gemäß der Erfindung ist auch ein Verfahren zum Kommissionieren von Ladegut auf eine Palette mit einem Ladeboden und zwei Seitenwänden mit einer erfindungsgemäßen Vorrichtung vorgesehen, wobei das Verfahren folgende Schritte aufweist: Einbringen der Palette in den Kommissionierschacht, so dass die Oberseiten der Seitenwände unterhalb oder auf Höhe der Kommissionierebene angeordnet sind, wobei in der Kommissionierebene Ladegut während des Kommissionierens bewegt wird, seitliches Einfahren der Zunge in den Kommissionierschacht, so dass die Zunge den Kommissionierschacht nach unten gegen Herunterfallen von Ladegut verschließt und eine Oberseite der Zunge im Wesentlichen auf Höhe der Kommissionierebene angeordnet ist, schichtweises Beladen der Oberseite der Zunge mit Ladegut, gegebenenfalls schrittweises Absenken der Zunge im Kommissionierschacht während des Beladens mit Ladegut, so dass eine Oberseite der zuletzt gestapelten Ladegutschicht etwa auf Höhe der Kommissionierebene liegt, Anheben der Palette oder Absenken der Zunge, bis die Oberseite des Ladebodens der Palette unmittelbar unterhalb der Unterseite der Zunge angeordnet ist oder an der Unterseite der Zunge anliegt, und Herausziehen der Zunge aus dem Kommissionierschacht und gleichzeitiges Abstreifen des auf der Zunge aufliegenden Ladeguts auf den Ladeboden der Palette.

Gemäß der Erfindung erfolgt das Abstreifen des auf der Zunge aufliegenden Ladeguts durch wenigstens teilweises Verschließen einer Öffnung in der seitlichen Begrenzungswand des Kommissionierschachts, durch die die Zunge eingefahren und ausgefahren wird, mittels eines bewegbaren Anschlags und durch Herausziehen der Zunge aus dem Kommissionierschacht.

Gemäß der Erfindung ist das wenigstens teilweise Verschließen der Öffnung in der seitlichen Begrenzungswand mittels eines als Anschlag wirkenden Rollladens vorgesehen, wobei eine Unterkante des Rollladens vor dem Herausziehen der Zunge unmittelbar oberhalb oder auf der Oberseite der Zunge angeordnet wird.

In Weiterbildung der Erfindung ist das wenigstens abschnittsweise Anordnen eines Rollladens oberhalb der Kommissionierebene vorgesehen, um eine Gegenplatte beim Anordnen von Ladegut auf der Zunge zu bilden.

In Weiterbildung der Erfindung ist das Einführen der Seitenwände der Palette in schlitzartige Führungen vorgesehen, wobei die schlitzartigen Führungen eine Trennfläche zwischen den Seitenwänden und dem Innenraum des Kommissionierschachts bilden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine schematische Darstellung einer erfindungsgemäßen Vorrichtung zum Kommissionieren von Ladegut auf Paletten von schräg oben in einem ersten Zustand,
- Fig. 2: die Vorrichtung der Fig. 1 in einem zweiten Zustand,
- Fig. 3: die Vorrichtung der Fig. 1 in einem dritten Zustand und aus einem leicht geänderten Blickwinkel,
- Fig. 4: die Vorrichtung der Fig. 1 in einem vierten Zustand,
- Fig. 5: eine Schnittansicht der Vorrichtung der Fig. 4,
- Fig. 6: die Vorrichtung der Fig. 1 in einem fünften Zustand,
- Fig. 7: eine Schnittansicht der Vorrichtung der Fig. 6,
- Fig. 8: die Vorrichtung der Fig. 1 in einem sechsten Zustand und
- Fig. 9: eine Schnittansicht der Vorrichtung der Fig. 8.

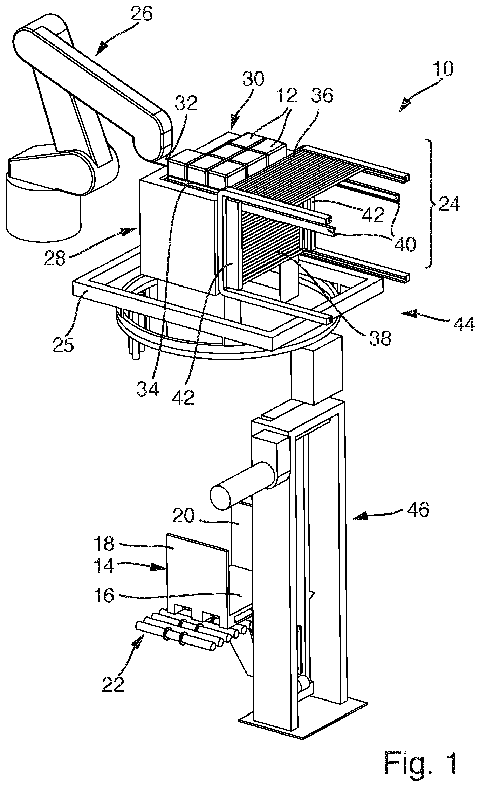

Die Darstellung der Fig. 1 zeigt eine erfindungsgemäße Vorrichtung 10 zum Kommissionieren von Ladegut 12 auf Paletten 14. Die Palette 14 ist lediglich schematisch dargestellt und weist einen Ladeboden 16 und zwei Seitenwände 18, 20 auf. Die Seitenwände 18, 20 sind einander gegenüberliegend angeordnet und erstrecken sich ausgehend vom Ladeboden 16 aus nach oben. Unterhalb des Ladebodens 16 sind mehrere, von der Außenseite her zugängliche Hohlräume angeordnet, wie sie üblicherweise bei Paletten zu finden sind. Diese Hohlräume dienen zum Einschieben der Ladegabeln von Transportfahrzeugen.

Die Palette 14 wird der erfindungsgemäßen Vorrichtung 10 über Fördertechnik 22, bei der dargestellten Ausführungsform ein Rollentransportband, zugeführt. Die Palette 14 ist in dem in Fig. 1 dargestellten ersten Zustand der Vorrichtung 10 nicht beladen. Über die Fördertechnik 22 wird die Palette 14 dann im beladenen Zustand wieder abgeführt.

Die Vorrichtung 10 weist eine Kommissionierstation 24 auf, die in allen Figuren lediglich abschnittsweise dargestellt ist, die einen nur abschnittsweise dargestellten Bodenrahmen 25 aufweist und auf der unter anderem ein Laderoboter 26 angeordnet ist. Im Bereich der Kommissionierstation 24 endet ein Kommissionierschacht 28, der einen rechteckigen Querschnitt aufweist und insgesamt vier Begrenzungswände hat. In den Kommissionierschacht 28 wird die Palette 14 von unten her eingeschoben und dann mittels der Vorrichtung 10 mit Ladegut 12 beladen. Als Kommissionierbühne wird eine Oberseite des Bodenrahmens 25 bezeichnet, die beispielsweise mit Bodenplatten belegt sein kann.

Drei der Begrenzungswände des Kommissionierschachts 28 enden auf Höhe einer Kommissionierebene 30, die durch die Oberseiten der drei Begrenzungswände des Kommissionierschachts 28 gebildet ist. In der Kommissionierebene legt der Laderoboter 26 mittels eines Ladeblechs 32 einzelne Ladegutstücke 12 auf eine Zunge 34 auf, die auf Höhe der Kommissionierebene 30 in den Kommissionierschacht 28 eingefahren wurde und die nachfolgend noch genauer beschrieben wird.

Eine vierte Begrenzungswand des Kommissionierschachts wird durch einen ersten beweglichen Rollladen 36 und einen zweiten beweglichen Rollladen 38 gebildet. Der erste Rollladen 36 liegt auf einer Oberseite der Zunge 34 auf und der zweite Rollladen 38 wird von unten her an die Unterseite der Zunge 34 herangefahren. Der erste Rollladen 36 erstreckt sich über die Kommissionierebene hinaus und bildet dadurch eine Begrenzungswand des Kommissionierschachts 28, die über die Kommissionierebene 30 hinausragt. Der erste Rollladen 36 bildet dadurch in dem in Fig. 1 dargestellten ersten Zustand der Vorrichtung 10 auch einen Anschlag zum Anlegen von Ladegut 12 mittels des Laderoboters 26.

Die Zunge 34 ist, wie bereits erläutert wurde, im ersten Zustand der Vorrichtung 10, der in Fig. 1 dargestellt ist, auf Höhe der Kommissionierebene in den Kommissionierschacht 28 eingefahren worden. Die Zunge 34 ist verschiebbar an zwei Schienen 40 gelagert und kann dadurch in den Kommissionierschacht 28 hinein und wieder vollständig aus dem Kommissionierschacht 28 herausgefahren werden. Die beiden Schienen 40 sind wiederum an vertikal angeordneten Hubschienen 42 befestigt, so dass also die Zunge 34 auch in Höhenrichtung von der Kommissionierebene 30 aus nach unten verschoben werden kann.

Unterhalb der Kommissionierstation 24 und speziell unterhalb der Unterkante des Kommissionierschachts 28 ist eine Einrichtung 44 zum Umwickeln einer fertig beladenen Palette 14 mit Folie schematisch angedeutet.

Unterhalb der Kommissionierstation 24 und unterhalb des Kommissionierschachts 28 ist darüber hinaus eine Hebeeinrichtung 46 vorgesehen, die zum Abheben der Palette 14 von der Fördertechnik 22 und zum Einfahren der Palette 14 in den Kommissionierschacht 28 von dessen Unterseite her vorgesehen ist.

Fig. 1 stellt, wie ausgeführt wurde, einen ersten Zustand der Vorrichtung 10 dar, in dem die noch nicht beladene Palette 14 mittels der Fördertechnik 22 gerade in den Bereich der Hebeeinrichtung 46 bewegt wurde. Obwohl die Palette 14 noch nicht auf Höhe der Kommissionierebene 30 angeordnet ist, hat der Laderoboter 26 bereits begonnen, Ladegutstücke 12 auf die in den Kommissionierschacht 28 eingefahrene Zunge 34 zu laden. Wie in Fig. 1 zu erkennen ist, ist die Zunge 34 noch nicht über den vollständigen Querschnitt des Kommissionierschachts 28 beladen. Der Laderoboter 26 wird daher in dem ersten Zustand der Vorrichtung 10 noch zwei weitere Ladegutstücke 12 auf die Zunge 34 aufladen, bevor diese dann, wie nachfolgend noch erläutert wird, um die Höhe der einzelnen Ladegutstücke 12 in den Kommissionierschacht 28 nach unten hin abgesenkt wird. Die Oberseite der Ladegutstücke 12 ist dann wieder auf Höhe der Kommissionierebene 30 angeordnet und der Laderoboter 26 kann dann eine weitere Lage Ladegut auf die Oberseite des bereits auf der Zunge 34 aufliegenden Ladeguts anordnen.

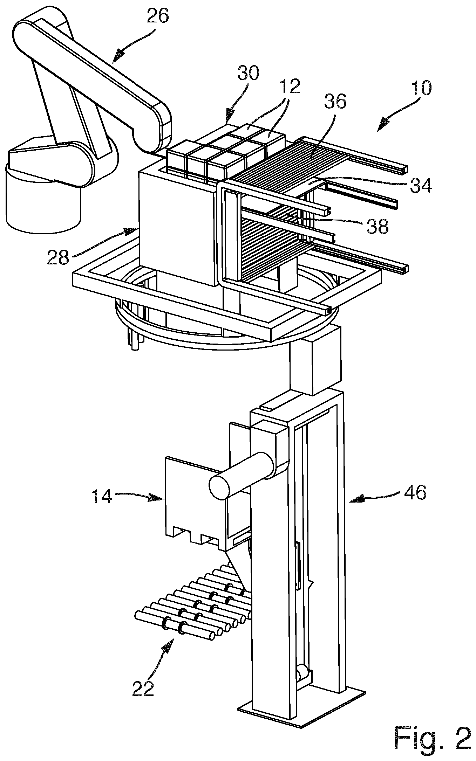

Fig. 2 zeigt einen zweiten Zustand der Vorrichtung 10, der zeitlich auf den ersten Zustand der Fig. 1 folgt. Wie beschrieben wurde, ist die Zunge 34 um die Höhe einer Lage von Ladegut nach unten in den Kommissionierschacht 28 hinein abgesenkt worden, so dass die Oberseite der ersten Lage an Ladegut nun auf Höhe der Kommissionierebene 30 angeordnet ist. In Fig. 2 sind bereits weitere Ladegutstücke 12 mittels des Laderoboters 26 in der Kommissionierebene 30 platziert worden, wobei die zweite Lage an Ladegut im Zustand der Fig. 2 noch nicht vollständig ist.

Der erste bewegliche Rollladen 36 liegt mit seiner Vorderkante unverändert auf der Oberseite der Zunge 34 auf und wurde infolgedessen ausgehend vom Zustand der Fig. 1 im Zustand der Fig. 2 ein Stück weit nach unten verschoben. Der zweite bewegliche Rollladen 38 liegt unverändert mit seiner Vorderkante an der Unterseite der Zunge 34 an und wurde infolgedessen ausgehend vom Zustand der Fig. 1 im Zustand der Fig. 2 ebenfalls ein Stück weit nach unten verschoben.

Die Palette 14 wurde ausgehend vom Zustand der Fig. 1 im Zustand der Fig. 2 mittels der Hebeeinrichtung 46 von der Fördertechnik 22 abgehoben und ein Stück weit nach oben in Richtung auf den Kommissionierschacht 28 zubewegt.

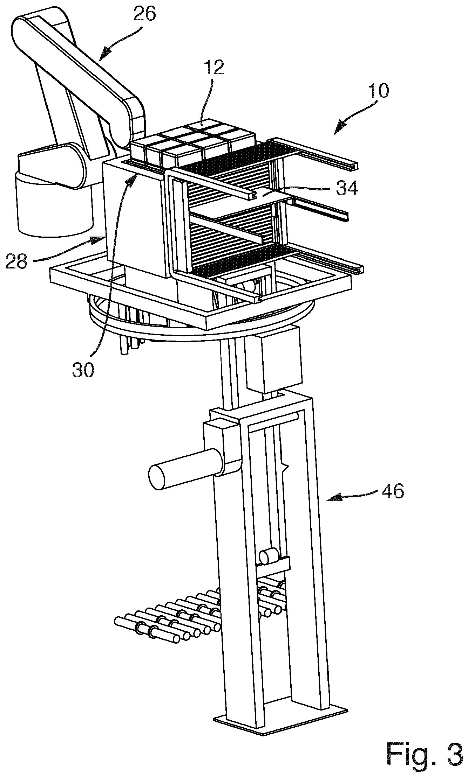

Fig. 3 zeigt einen dritten Zustand der Vorrichtung 10. Die Palette 14 ist in Fig. 3 bereits von der Unterseite her in den Kommissionierschacht 28 mittels der Hebeeinrichtung 46 eingefahren worden und ist in Fig. 3 daher nicht mehr zu erkennen.

Die Zunge 34 wurde gegenüber dem Zustand der Fig. 2 ein weiteres Stück abgesenkt und im Zustand der Fig. 3 ist bereits eine dritte Lage an Ladegut mittels des Laderoboters 26 in der Kommissionierebene 30 angeordnet worden.

Immer dann, wenn eine vollständige Lage an Ladegut in der Kommissionierebene 30 angeordnet wurde, wie dies in Fig. 3 dargestellt ist, wird die Zunge 34 um die Höhe einer Lage an Ladegut nach unten in den Kommissionierschacht 28 hinein abgesenkt, so dass eine Oberseite der obersten Lage an Ladegut wieder auf Höhe der Kommissionierebene 30 angeordnet ist.

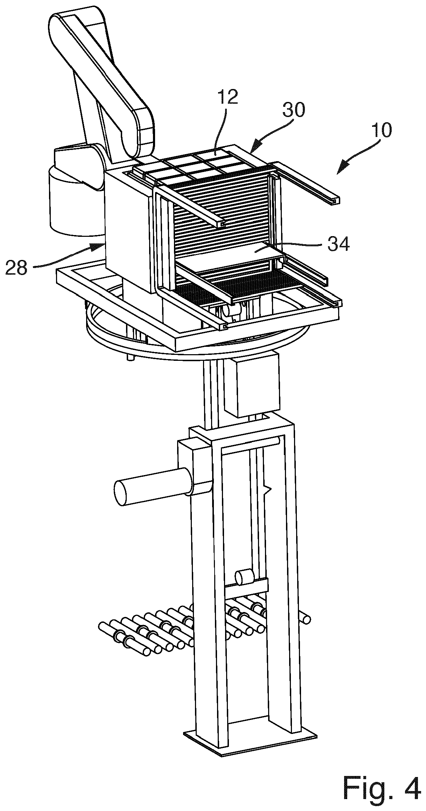

Ein solcher vierter Zustand der Vorrichtung 10 ist in Fig. 4 dargestellt. Die Zunge 34 ist ausgehend vom Zustand der Fig. 3 noch weiter in den Kommissionierschacht 28 hinein abgesenkt worden. Im Kommissionierschacht 28 befindet sich nun eine vollständige Palettenladung an Ladegut aus Ladegutstücken 12. Bei der dargestellten, lediglich beispielhaften, Größe der einzelnen Ladegutstücke 12 entspricht dies vier Lagen an Ladegut.

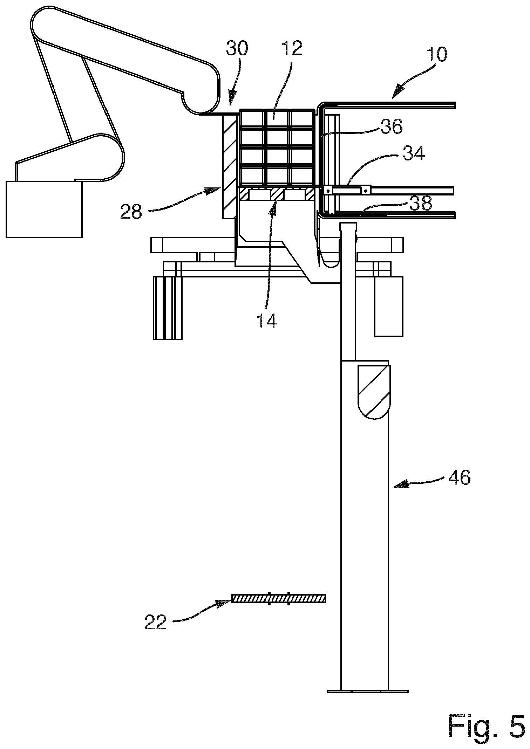

Dies ist in Fig. 5 zu erkennen, die eine Schnittansicht der Vorrichtung 10 im vierten Zustand der Fig. 4 darstellt. Auf der Zunge 34 sind vier Lagen an Ladegutstücke 12 angeordnet und die Oberseite der obersten Lage an Ladegut ist etwa auf Höhe der Kommissionierebene 30 angeordnet.

Eine Unterseite der Zunge 34 liegt nun auf dem Ladeboden der Palette 14 auf, die mittels der Hebeeinrichtung 46 im Kommissionierschacht 28 gehalten wird. Der erste bewegliche Rollladen 36 liegt auf der Oberseite der Zunge 34 auf und bildet dadurch die in Fig. 5 rechts angeordnete Begrenzungswand des Kommissionierschachts 28. Der zweite bewegliche Rollladen 38 liegt an einer Unterseite der Zunge 34 an und setzt dadurch die in Fig. 5 rechts liegende Begrenzungswand des Kommissionierschachts 28 unterhalb der Zunge 34 fort.

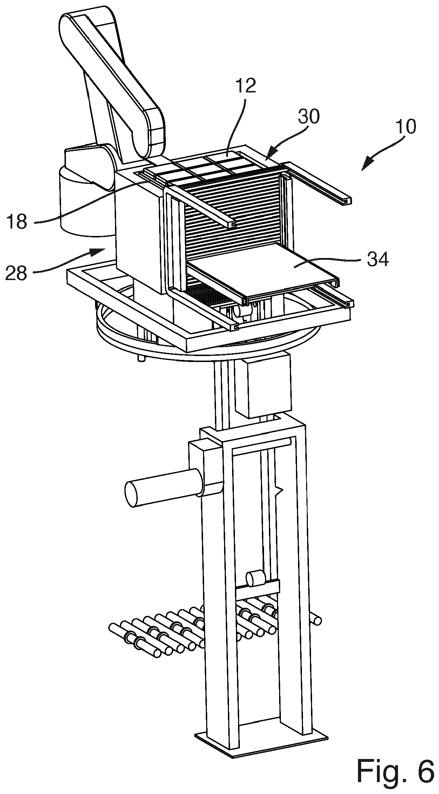

Fig. 6 zeigt die Vorrichtung 10 in einem fünften Zustand. In diesem fünften Zustand, der auf den vierten Zustand der Fig. 4 und 5 folgt, ist der Stapel aus mehreren Lagen an Ladegut 12 von der Oberseite der Zunge 34 auf den Ladeboden der Palette 14 abgestreift worden. Dies wird ausgehend vom vierten Zustand der Fig. 4 und 5 dadurch bewirkt, dass die Zunge 34 aus dem Kommissionierschacht 28 herausgezogen wird. Ausgehend vom Zustand der Fig. 5 wird die Zunge 34 also nach rechts aus dem Kommissionierschacht 28 herausgezogen. Der erste Rollladen 36, der einen Abschnitt der Begrenzungswand des Kommissionierschachts 28 bildet, wirkt dabei als Anschlag für den Stapel aus mehreren Lagen an gestapeltem Ladegut 12. Der erste Rollladen 36 sorgt also dafür, dass der Stapel an Ladegut 12 innerhalb des Kommissionierschachts 28 verbleibt und dass der Stapel an Ladegut 12 von der Oberseite der Zunge 34 auf den Ladeboden der Palette 14 abgestreift werden kann.

In Fig. 6 ist auch die Oberkante einer Seitenwand 18 der Palette 14 zu erkennen, wobei die Oberkante auf Höhe der Kommissionierebene 30 angeordnet ist. Beide Seitenwände 18, 20 der Palette 14 sind hinter U-förmigen Führungsblechen im Kommissionierschacht 28 angeordnet, die in Fig. 6 nicht zu erkennen sind.

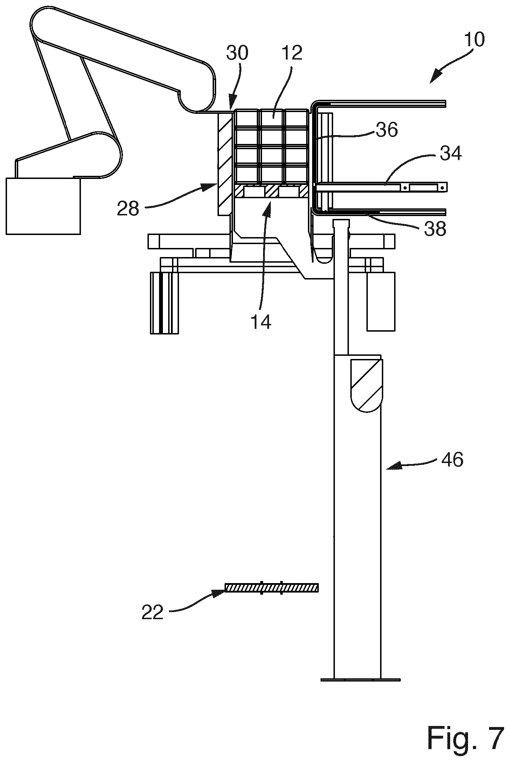

Im fünften Zustand der Fig. 6 ruht der Stapel an Ladegut 12 somit auf dem Ladeboden der Palette 14. Dies ist in der Schnittansicht der Fig. 7 der Vorrichtung 10 zu erkennen. Fig. 7 zeigt eine Schnittansicht der Vorrichtung 10 im fünften Zustand der Fig. 6. Der Stapel an Ladegut 12 liegt nun auch genau zwischen den beiden Seitenwänden der Palette 14. Die Palette 14 wird vor dem Abstreifen des Ladeguts 12 auf den Ladeboden so im Kommissionierschacht 28 angeordnet, dass die Oberseiten der Seitenwände 18, 20 der Palette 14 etwa auf Höhe der Kommissionierebene 30 angeordnet sind. Fig. 6 lässt die Oberseite der Seitenwand 18 der Palette 14 erkennen.

Ausgehend vom Zustand der Fig. 7 wird die dann vollständig beladene Palette 14 mittels der Hebeeinrichtung 46 wieder nach unten aus dem Kommissionierschacht 28 herausbewegt. Dabei verschließt der zweite Rollladen 38 die seitliche Öffnung des Kommissionierschachts 28, innerhalb der die Zunge 34 bewegt wird, und verhindert dadurch, dass Ladegut durch diese Öffnung von der beladenen Palette herabfällt.

Sobald das Ladegut nach dem Abstreifen von der Zunge 34 auf dem Ladeboden 16 der Palette 14 aufliegt, kann die Zunge 34 ausgehend vom Zustand der Fig. 6 und Fig. 7 wieder nach oben bewegt werden, bis die Oberseite der Zunge 34 auf Höhe der Kommissionierebene 30 angeordnet ist. Der erste bewegliche Rollladen 36 wird dabei zusammen mit der Zunge 34 nach oben verschoben. Während der Bewegung nach oben oder sobald die Zunge 34 mit ihrer Oberseite auf Höhe der Kommissionierebene 30 angeordnet ist, kann die Zunge 34 dann wieder in den Kommissionierschacht 28 hineinbewegt werden. Der zweite bewegliche Rollladen 38 wird ebenfalls zusammen mit der Zunge 34 nach oben verschoben.

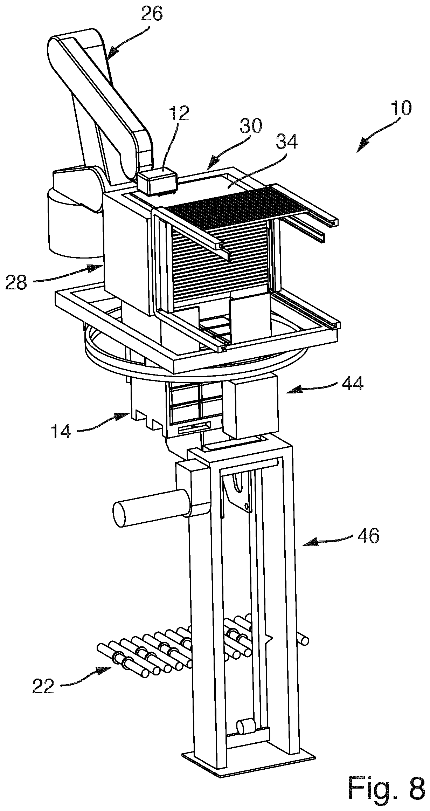

In dem in Fig. 8 dargestellten sechsten Zustand der Vorrichtung 10 ist die Oberseite der Zunge 34 bereits auf Höhe der Kommissionierebene 30 angeordnet und die Zunge 34 wurde bereits wieder in den Kommissionierschacht 28 hineinbewegt. Der Laderoboter 26 beginnt umgehend damit, die Zunge 34 mit weiterem Ladegut 12 zu beladen.

Die vollständig beladene Palette 14 befindet sich unterhalb des Kommissionierschachts 28 im Bereich der Einrichtung 44, um die vollständig beladene Palette 14 mit Folie zu umwickeln.

Nach dem Umwickeln der Palette 14 mit Folie, wobei dieses Umwickeln mit Folie optional ist, wird die beladene Palette 14 mittels der Hebeeinrichtung 46 wieder auf der Fördertechnik 22 abgesetzt und kann dann aus dem Bereich der Vorrichtung 10 abgeführt werden.

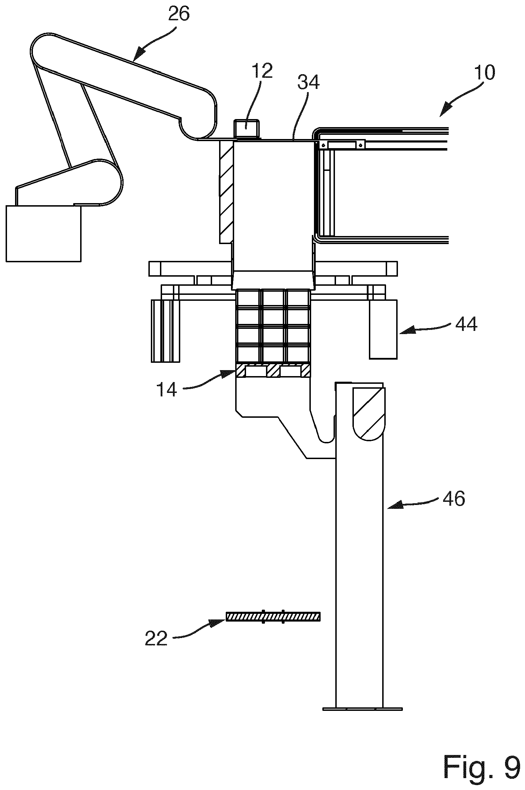

Fig. 9 zeigt eine Schnittansicht der Vorrichtung 10 im sechsten Zustand der Fig. 8. Wie bereits beschrieben wurde, wird die Oberseite der Zunge 34 vom Laderoboter 26 bereits wieder mit einem Ladegutstück 12 beladen, noch während die beladene Palette 14 im Bereich der Einrichtung 44 entweder mit Folie umwickelt oder wieder mit der Hebeeinrichtung 46 auf die Fördertechnik 22 abgesetzt wird.

Auf den sechsten Zustand der Vorrichtung 10, die in den Fig. 8 und 9 dargestellt ist, folgt während des Kommissionierens von Ladegut mit der erfindungsgemäßen Vorrichtung wieder der erste Zustand der Fig. 1, in dem die beladene Palette 14 bereits abgefahren wurde und eine neue, leere Palette 14 wieder auf der Fördertechnik 22 im Bereich der Hebeeinrichtung 46 angeordnet wurde. Während des Abfahrens der beladenen Palette und des Anfahrens der leeren Palette hat der Laderoboter 26 weiter Ladegut auf der Oberseite der Zunge 34 angeordnet.

Mit der erfindungsgemäßen Vorrichtung zum Kommissionieren und dem erfindungsgemäßen Verfahren kann dadurch Ladegut 12 auf Paletten 14 mit wenigstens zwei Seitenwänden 18, 20 kommissioniert werden, ohne dass die Seitenwände während des Kommissioniervorgangs stören würden. Da das Ladegut zunächst auf die Oberseite der Zunge 34 gestapelt wird, kann der Laderoboter 26 sich in der Kommissionierebene 30 im Wesentlichen frei bewegen, da die Seitenwände 18, 20 der Palette 14 nicht über die Kommissionierebene 30 hinausragen. Mittels des beweglichen Rollladens 36 kann ein beweglicher Anschlag gebildet werden, der das Beladen der Oberseite der Zunge 34 mit Ladegut erleichtert. Es ist im Rahmen der Erfindung aber auch vorgesehen, dass der erste Rollladen 36 sich nicht über die Kommissionierebene 30 hinaus erstreckt, aber die seitlichen Begrenzungswände des Kommissionierschachts 28 alle auf Höhe der Kommissionierebene 30 enden.

## Patentansprüche

1. Vorrichtung zum Kommissionieren von Ladegut auf Paletten (14), wobei die Paletten (14) einen Ladeboden (16) und wenigstens zwei Seitenwände (18, 20) aufweisen, mit einem Kommissionierschacht (28), der sich bis zu einer Kommissionierebene (30), in der Ladegut während des Kommissionierens bewegt wird, erstreckt, einer Hub- und Absenkvorrichtung (46) zum Heben und Absenken der Palette (14) in dem Kommissionierschacht (28), einer in den Kommissionierschacht (28) von der Seite her einfahrbaren und wieder ausfahrbaren Zunge (34) zum Beladen mit Ladegut, einer Einrichtung zum schrittweisen Absenken der Zunge (34) während des Beladens mit Ladegut, so dass eine Oberseite einer zuletzt auf die Zunge (34) gelegten Ladegutschicht etwa auf Höhe der Kommissionierebene (30) angeordnet ist, und Abstreifmitteln, die zumindest beim Ausfahren der Zunge (34) aus dem Kommissionierschacht (28) Ladegut von der Oberseite der Zunge (34) auf den Ladeboden (16) der Palette (14) abstreifen, wobei Begrenzungswände des Kommissionierschachts (28) auf Höhe der Kommissionierebene (30) enden oder sich lediglich eine Begrenzungswand des Kommissionierschachts (28) über die Kommissionierebene (30) hinaus erstreckt, wobei die Abstreifmittel einen bewegbaren Anschlag aufweisen und wobei der bewegbare Anschlag mittels eines ersten Rollladens (36) ausgebildet ist, der eine Öffnung in einer ersten Begrenzungswand des Kommissionierschachts (28), durch die die Zunge (34) in den Kommissionierschacht (28) ein- und ausgefahren werden kann, wenigstens abschnittsweise verschließen kann.

2. Vorrichtung nach Anspruch 1, **dadurch gekennzeichnet, dass** der bewegbare Anschlag der Abstreifmittel über die Kommissionierebene (30) hinaus bewegt werden kann, um eine Gegenplatte beim Anordnen von Ladegut auf der Zunge (34) zu bilden.

3. Vorrichtung nach Anspruch 1 oder 2, **dadurch gekennzeichnet, dass** ein zweiter Rollladen (38) vorgesehen ist, der die Öffnung in der ersten Begrenzungswand des Kommissionierschachts (28) unterhalb der Zunge (34) wenigstens abschnittsweise verschließen kann.

4. Vorrichtung nach wenigstens einem der vorstehenden Ansprüche, **dadurch gekennzeichnet, dass** schlitzartige Führungen für die Seitenwände (18, 20) der Palette (14) vorgesehen sind, wobei sich die Führungen von der Kommissionierebene (30) aus nach unten erstrecken und wobei eine Vorderfläche jeder schlitzartigen Führung eine Begrenzung des Kommissionierschachts (28) bildet.

5. Vorrichtung nach Anspruch 4, **dadurch gekennzeichnet, dass** wenigstens eine der schlitzartigen Führungen mittels eines u-artig gebogenen Führungsblechs gebildet ist, das dann, wenn eine Seitenwand (18, 20) der Palette (14) in die Führung eingeschoben ist, eine Trennfläche zwischen dem Innenraum des Kommissionierschachts (28) und der Seitenwand (18, 20) der Palette (14) bildet.

6. Vorrichtung nach wenigstens einem der vorstehenden Ansprüche, **dadurch gekennzeichnet, dass** zum, insbesondere automatischen, Beladen oder Entladen ein Roboter (26) oder ein Ladeportal vorgesehen ist.

7. Verfahren zum Kommissionieren von Ladegut auf eine Palette (14) mit einem Ladeboden (16) und zwei Seitenwänden (18, 20) mit einer Vorrichtung nach wenigstens einem der vorstehenden Ansprüche und mit folgenden Schritten: Einbringen der Palette (14) in den Kommissionierschacht (28), so dass die Oberseiten der Seitenwände (18, 20) unterhalb oder auf Höhe der Kommissionierebene (30) angeordnet sind, wobei in der Kommissionierebene Ladegut während des Kommissionierens bewegt wird, seitliches Einfahren der Zunge (34) in den Kommissionierschacht (28), so dass die Zunge (34) den Kommissionierschacht (28) nach unten gegen Herunterfallen von Ladegut verschließt und eine Oberseite der Zunge (34) im Wesentlichen auf Höhe der Kommissionierebene (30) angeordnet ist, schichtweises Beladen der Oberseite der Zunge (34) mit Ladegut, gegebenenfalls schrittweises Absenken der Zunge (34) im Kommissionierschacht (28) während des Beladens mit Ladegut, so dass eine Oberseite der zuletzt gestapelten Ladegutschicht etwa auf Höhe der Kommissionierebene (30) liegt, Anheben der Palette (14) oder Absenken der Zunge (34) bis die Oberseite des Ladebodens (16) der Palette (14) unmittelbar unterhalb der Unterseite der Zunge (34) angeordnet ist oder an der Unterseite der Zunge (34) anliegt, Herausziehen der Zunge (34) aus dem Kommissionierschacht (28) und gleichzeitiges Abstreifen des auf der Zunge (34) aufliegenden Ladeguts auf den Ladeboden (16) der Palette (14), Abstreifen des auf der Zunge (34) aufliegenden Ladeguts durch wenigstens teilweises Verschließen einer Öffnung in der seitlichen Begrenzungswand des Kommissionierschachts (28), durch die die Zunge (34) eingefahren und ausgefahren wird, mittels eines bewegbaren Anschlags und Herausziehen der Zunge (34) aus dem Kommissionierschacht (28) und wenigstens teilweises Verschließen der Öffnung in der seitlichen Begrenzungswand mittels eines als Anschlag wirkenden Rollladens (36), wobei eine Unterkante des ersten Rollladens (36) vor dem Herausziehen der Zunge (34) unmittelbar oberhalb oder auf der Oberseite der Zunge (34) angeordnet wird.

8. Verfahren nach Anspruch 7, **gekennzeichnet durch** abschnittsweises Anordnen eines Rollladens oberhalb der Kommissionierebene, um eine Gegenplatte beim Anordnen von Ladegut auf der Zunge zu bilden.

9. Verfahren nach Anspruch 7 oder 8, **gekennzeichnet durch** Einführen der Seitenwände (18, 20) der Palette (14) in schlitzartigen Führungen im Kommissionierschacht (28), wobei die schlitzartige Führungen eine Trennfläche zwischen den Seitenwänden (18, 20) und dem Innenraum des Kommissionierschachts (28) bilden.

## Claims

1. Apparatus for commissioning load goods on pallets (14), wherein the pallets (14) have a loading bed (16) and at least two side walls (18, 20), having a commissioning shaft (28) which extends as far as a commissioning plane (30) in which the load goods are moved during commissioning, a lifting and lowering apparatus (46) for lifting and lowering the pallet (14) in the commissioning shaft (28), a tongue (34), which is able to be moved into the commissioning shaft (28) from the side and back out again, for loading with load goods, a device for incrementally lowering the tongue (34) while it is being loaded with load goods such that a top side of a load-goods layer laid last on the tongue (34) is arranged approximately at the height of the commissioning plane (30), and stripping means which, at least when the tongue (34) is moved out of the commissioning shaft (28), strip load goods from the top side of the tongue (34) onto the loading bed (16) of the pallet (14), wherein boundary walls of the commissioning shaft (28) end at the height of the commissioning plane (30) or only one boundary wall of the commissioning shaft (28) extends beyond the commissioning plane (30), wherein the stripping means have a movable stop, and wherein the movable stop is formed by means of a first roller shutter (36) which can at least partially close an opening in a first boundary wall of the commissioning shaft (28), through which the tongue (34) can be moved into and out of the commissioning shaft (28).

2. Apparatus according to Claim 1, **characterized in that** the movable stop of the stripping means can be moved beyond the commissioning plane (30) in order to form a counter-plate when load goods are arranged on the tongue (34).

3. Apparatus according to Claim 1 or 2, **characterized in that** a second roller shutter (38) is provided, which can at least partially close the opening in the first boundary wall of the commissioning shaft (28) beneath the tongue (34).

4. Apparatus according to at least one of the preceding claims, **characterized in that** slot-like guides for the side walls (18, 20) of the pallet (14) are provided, wherein the guides extend downwards from the commissioning plane (30), and wherein a front face of each slot-like guide forms a boundary of the commissioning shaft (28).

5. Apparatus according to Claim 4, **characterized in that** at least one of the slot-like guides is formed by means of a guide plate bent in a U shape, which, when a side wall (18, 20) of the pallet (14) has been inserted into the guide, forms a separation plane between the interior of the commissioning shaft (28) and the side wall (18, 20) of the pallet (14) .

6. Apparatus according to at least one of the preceding claims, **characterized in that** a robot (26) or a loading gantry is provided for the, in particular automatic, loading or unloading.

7. Method for commissioning load goods on a pallet (14) having a loading bed (16) and two side walls (18, 20) using an apparatus according to at least one of the preceding claims and having the following steps: introducing the pallet (14) into the commissioning shaft (28) such that the top sides of the side walls (18, 20) are arranged below or at the height of the commissioning plane (30), wherein load goods are moved in the commissioning plane during commissioning, laterally moving the tongue (34) into the commissioning shaft (28) such that the tongue (34) downwardly closes the commissioning shaft (28) to prevent load goods from falling down and a top side of the tongue (34) is arranged substantially at the height of the commissioning plane (30), loading the top side of the tongue (34) with layers of load goods, optionally incrementally lowering the tongue (34) in the commissioning shaft (28) while it is being loaded with load goods, such that a top side of the load-goods layer stacked last lies approximately at the height of the commissioning plane (30), raising the pallet (14) or lowering the tongue (34) until the top side of the loading bed (16) of the pallet (14) is arranged immediately below the underside of the tongue (34) or bears against the underside of the tongue (34), retracting the tongue (34) from the commissioning shaft (28) and simultaneously stripping the load goods resting on the tongue (34) onto the loading bed (16) of the pallet (14), stripping the load goods resting on the tongue (34) by at least partially closing an opening in the lateral boundary wall of the commissioning shaft (28), through which the tongue (34) is moved in and out, by means of a movable stop and retracting the tongue (34) from the commissioning shaft (28) and at least partially closing the opening in the lateral boundary wall by means of a roller shutter (36) acting as a stop, wherein a lower edge of the first roller shutter (36) is arranged immediately above or on the top side of the tongue (34) before the tongue (34) is retracted.

8. Method according to Claim 7, **characterized by** partially arranging a roller shutter above the commissioning plane in order to form a counter-plate when arranging load goods on the tongue.

9. Method according to Claim 7 or 8, **characterized by** introducing the side walls (18, 20) of the pallet (14) into slot-like guides in the commissioning shaft (28), wherein the slot-like guides form a separation plane between the side walls (18, 20) and the interior of the commissioning shaft (28).

## Revendications

1. Dispositif permettant de préparer des commandes de marchandises chargées sur des palettes (14), les palettes (14) présentant un plancher de chargement (16) et au moins deux parois latérales (18, 20), comprenant une cage de préparation de commandes (28) qui s'étend jusqu'à un niveau de préparation de commandes (30) sur lequel des marchandises chargées sont déplacées pendant la préparation de commandes, un dispositif de levage et d'abaissement (46) pour soulever et abaisser la palette (14) dans la cage de préparation de commandes (28), une lame (34) pouvant être rentrée dans la cage de préparation de commandes (28) par le côté et pouvant être ressortie de celle-ci pour le chargement avec des marchandises chargées, un équipement pour abaisser progressivement la lame (34) pendant le chargement avec des marchandises chargées de sorte qu'une face supérieure d'une couche de marchandises chargées posée en dernier sur la lame (34) est disposée approximativement à la hauteur du niveau de préparation de commandes (30), et des moyens d'enlèvement qui enlèvent au moins lors de la sortie de la lame (34) de la cage de préparation de commandes (28) des marchandises chargées de la face supérieure de la lame (34) vers le plancher de chargement (16) de la palette (14), dans lequel des parois de limitation de la cage de préparation de commandes (28) se terminent à la hauteur du niveau de préparation de commandes (30) ou une seule paroi de limitation de la cage de préparation de commande (28) s'étend au-delà du niveau de préparation de commandes (30), dans lequel les moyens d'enlèvement présentent une butée mobile, et dans lequel la butée mobile est réalisée au moyen d'un premier volet roulant (36) qui peut fermer au moins par endroits une ouverture dans une première paroi de limitation de la cage de préparation de commandes (28) à travers laquelle la lame (34) peut être entrée dans ou sortie de la cage de préparation de commandes (28).

2. Dispositif selon la revendication 1, **caractérisé en ce que** la butée mobile des moyens d'enlèvement peut être déplacée au-delà du niveau de préparation de commandes (30) pour former une contre-plaque lors de l'agencement de marchandises chargées sur la lame (34).

3. Dispositif selon la revendication 1 ou 2, **caractérisé en ce qu'**un deuxième volet roulant (38) est prévu qui peut fermer au moins par endroits l'ouverture dans la première paroi de limitation de la cage de préparation de commandes (28) au-dessous de la lame (34) .

4. Dispositif selon au moins l'une des revendications précédentes, **caractérisé en ce que** des coulisses en forme de fente sont prévues pour les parois latérales (18, 20) de la palette (14), dans lequel les coulisses s'étendent du niveau de préparation de commandes (30) vers le bas, et dans lequel une surface avant de chaque coulisse en forme de fente forme une limitation de la cage de préparation de commandes (28).

5. Dispositif selon la revendication 4, **caractérisé en ce qu'**au moins l'une des coulisses en forme de fente est formée au moyen d'une tôle de guidage pliée en forme de U et qui, quand une paroi latérale (18, 20) de la palette (14) est insérée dans la coulisse, forme une surface de séparation entre l'espace intérieur de la cage de préparation de commandes (28) et la paroi latérale (18, 20) de la palette (14).

6. Dispositif selon au moins l'une des revendications précédentes, **caractérisé en ce qu'**un robot (26) ou un portique de chargement est prévu pour le chargement ou le déchargement, en particulier automatique.

7. Procédé permettant de préparer des commandes de marchandises chargées sur une palette (14) pourvue d'un plancher de chargement (16) et de deux parois latérales (18, 20), à l'aide d'un dispositif selon au moins l'une des revendications précédentes, et comprenant les étapes suivantes consistant à : introduire la palette (14) dans la cage de préparation de commandes (28) de sorte que les faces supérieures des parois latérales (18, 20) sont disposées au-dessous ou à la hauteur du niveau de préparation de commandes (30), des marchandises chargées étant déplacées sur le niveau de préparation de commandes pendant la préparation de commandes, faire entrer latéralement la lame (34) dans la cage de préparation de commandes (28) de sorte que la lame (34) ferme la cage de préparation de commandes (28) vers le bas contre la chute de marchandises chargées et qu'une face supérieure de la lame (34) est disposée substantiellement à la hauteur du niveau de préparation de commandes (30), charger par couche la face supérieure de la lame (34) avec des marchandises chargées, le cas échéant abaisser progressivement la lame (34) dans la cage de préparation de commandes (28) pendant le chargement avec des marchandises chargées de sorte qu'une face supérieure de la couche de marchandises chargées empilée en dernier se trouve approximativement à la hauteur du niveau de préparation de commandes (30), soulever la palette (14) ou abaisser la lame (34) jusqu'à ce que la face supérieure du plancher de chargement (16) de la palette (14) soit disposée directement au-dessous de la face inférieure de la lame (34) ou s'applique contre la face inférieure de la lame (34), retirer la lame (34) de la cage de préparation de commandes (28) et enlever simultanément les marchandises chargées posées sur la lame (34) vers le plancher de chargement (16) de la palette (14), enlever les marchandises chargées posées sur la lame (34) en fermant au moins partiellement une ouverture dans la paroi de limitation latérale de la cage de préparation de commandes (28) à travers laquelle la lame (34) est entrée et sortie au moyen d'une butée mobile, et retirer la lame (34) de la cage de préparation de commandes (28) et fermer au moins partiellement l'ouverture dans la paroi de limitation latérale au moyen d'un volet roulant (36) faisant office de butée, dans lequel une arête inférieure du premier volet roulant (36) est disposée directement au-dessus de ou sur la face supérieure de la lame (34) avant le retrait de la lame (34).

8. Procédé selon la revendication 7, **caractérisé par** un agencement par endroits d'un volet roulant au-dessus du niveau de préparation de commandes afin de former une contre-plaque lors de l'agencement de marchandises chargées sur la lame.

9. Procédé selon la revendication 7 ou 8, **caractérisé par** l'introduction des parois latérales (18, 20) de la palette (14) dans des coulisses en forme de fente dans la cage de préparation de commandes (28), dans lequel les coulisses en forme de fente forment une surface de séparation entre les parois latérales (18, 20) et l'espace intérieur de la cage de préparation de commandes (28) .
